# EUROPEAN PATENT APPLICATION

(11) **EP 4 610 901 A1**
(43) Date of publication of application: **03.09.2025**
(21) Application number: 23882257.1
(22) Date of filing: 06.09.2023
(51) Int. Cl.: G06Q 10/06, G06Q 10/30, G06Q 50/04

(54) **PRODUCTION EQUIPMENT VALUATION DEVICE, PRODUCTION EQUIPMENT VALUATION METHOD, AND PRODUCTION EQUIPMENT VALUATION PROGRAM**

(30) Priority: 26.10.2022 JP 2022171638
(71) Applicant: Hitachi, Ltd., Tokyo 100-8280 (JP)
(72) Inventor: SATO Hideki, Tokyo 100-8280 (JP); TANIGUCHI Shinichi, Tokyo 100-8280 (JP)
(74) Representative: MERH-IP Matias Erny Reichl Hoffmann Patentanwälte PartG mbB
(86) International application number: PCT/JP2023/032457
(87) International publication number: WO 2024/090044

(57) **Abstract**

An object of the present invention is to predict an economic value and an environmental value including reoperation, resale, reproduction, and recycling of production equipment, and to determine a processing destination at which the economic value and the environmental value are optimized. A production equipment valuation device 10 that evaluates production equipment includes: a storage unit 100 that stores production equipment related information 101 related to the production equipment; a production equipment value prediction unit 200 that predicts values in two or more operations of processing for the production equipment; a production equipment valuation unit 500 that compares predicted values in the two or more operations of processing; and a production equipment processing destination determination unit 600 that determines processing in the production equipment from the two or more operations of processing in accordance with a comparison result by the production equipment valuation unit 500.

## Description

### Technical field

The present invention relates to a production equipment valuation device, a production equipment valuation method, and a production equipment valuation program.

### Background Art

At present, environmental issues such as the implementation of a circulatory society attract attention. To solve the environmental issues, it is necessary to properly implement processing on resources such as articles, products, and the like. The processing includes reuse, repair, recycle, reselling (resale) and the like. Here, Patent Literature 1 and Patent Literature 2 have been proposed for resource management.

First, in order to manage the lease of an article, Patent Literature 1 discloses "A lease plan creating method for creating a lease plan for leasing an article during a predetermined period, the method including: setting at least one set period shorter than the predetermined period during the predetermined period; estimating a residual value of the article at expiration of the set period; calculating a cost to be recovered during the set period on the basis of a current price of the article, the residual value of the article at expiration of the set period, and various costs; estimating the residual value of the article at expiration of the predetermined period; calculating a cost to be recovered during an entirety of the predetermined period on the basis of a current price of the article, the residual value of the article at expiration of the predetermined period, and various costs; and calculating a lease fee on the basis of the cost to be recovered during the entirety of the predetermined period and the cost to be recovered during the set period".

Further, in order to manage a reselling price of an automobile, Patent Literature 2 discloses "A vehicle reselling price analysis system that predicts information on a sale price, a residual price, or a residual value rate of a vehicle before resale by using data on an already-resale vehicle such as a manufacturer name, a vehicle model name, a vehicle application, a vehicle shape, a vehicle model grade, a certified model, a model designation number, a classification number, a mission, a driving system, a displacement, the number of doors, a so-called model type, a capacity and a loading amount, an engine model, the number of cylinders of an engine, an engine mechanism, a tire size, a supercharger, a roof shape, an exhaust gas regulation, a body size, an automobile tax classification, a weight tax, an insurance class, a use contract year, a use contract expiration year, a use contract period, a new vehicle price, a sale price after use contract expiration, a travel distance at the time of resale, and assessment evaluation at the time of resale, the vehicle reselling price analysis system comprising: a first step of extracting data on the reselling vehicle resold in a predetermined period; a second step of extracting a factor affecting a vehicle reselling price by correlation analysis using the data extracted in the first step; and a third step of acquiring a multiple regression equation from a correlation between the extracted factor and data on a sold price, wherein the multiple regression equation acquired in the third step is used for predicting information on a predicted sold price, a predicted residual price, or a predicted residual value rate of a vehicle before reselling".

### Citation List

### Patent Literature

Patent Literature 1: Japanese Patent Application Publication No. 2003-67659
Patent Literature 2: Japanese Patent Application Publication No. 2005-174355

### Summary of Invention

### Technical Problem

Here, companies that are engaged in carbon neutral or circular economy for environmental response are increasing, and the importance of cost as well as environmental value creation is increasing. In addition, in order to improve the environmental value, it is important to manage products through promoting the reuse of a product, i.e., one kind of resource, and through utilizing the reuse of a reproduction component obtained by reusing a component recovered from a discarded product or a reproduction material obtained by returning a discarded product so as to be transformed into a material, and so on. In addition, in the fields of home electric appliances and automobiles, the amount of products distributed in the market is large, and laws and regulations for recycling have been put in place, and environmental response has been implemented ahead in this field.

On the other hand, in the field of production equipment and the like in which the product distribution amount is small, there is a problem in that the cost of recovery and recycling processing increases because the product distribution amount is small.

In the fields of rental, lease, and subscription type services of production equipment, after the production equipment provided to a user is recovered, whether to re-contract or resell the production equipment is determined with emphasis on cost. However, at the present time when the environmental value is asked, an effort to maximize the production equipment value, including the environmental value in addition to the economic value, is important.

Here, Patent Literature 1 discloses a lease plan creation method, creation device, and presentation device, which calculate a cost to be recovered during a lease period on the basis of a current price of a product, a residual value of the product at the time of expiration of the lease, and various expenses. In the device, the residual value after the expiration of the lease is estimated based on the data of secondhand price database, but the value of the production equipment by reuse or recycling is not considered. In addition, Patent Literature 2 discloses a system for determining a product reselling price in the automobile field, and does not consider the value of production equipment including recycling.

Therefore, an object of the present invention is to evaluate a value including an environmental value for production equipment and to realize appropriate processing for the production equipment. Solution to Problem

In order to solve the above problem, the present application compares values in respective two or more operations of processing for production equipment, and determines processing for the production equipment.

More specifically, a production equipment valuation device that evaluates production equipment includes: a storage unit that stores production equipment related information related to the production equipment; a production equipment value prediction unit that predicts values in two or more operations of processing for the production equipment; a production equipment valuation unit that compares predicted values in the two or more operations of processing; and a production equipment processing destination determination unit that determines processing in the production equipment from the two or more operations of processing in accordance with a comparison result by the production equipment valuation unit. In addition, in the present invention, a production equipment valuation method using a production equipment valuation device and a program for causing the production equipment valuation device to function as a computer are also included in the present invention.

### Advantageous Effects of Invention

According to the present invention, it is possible to achieve more appropriate processing for the production equipment.

### Brief Description of Drawings

[Fig. 1]

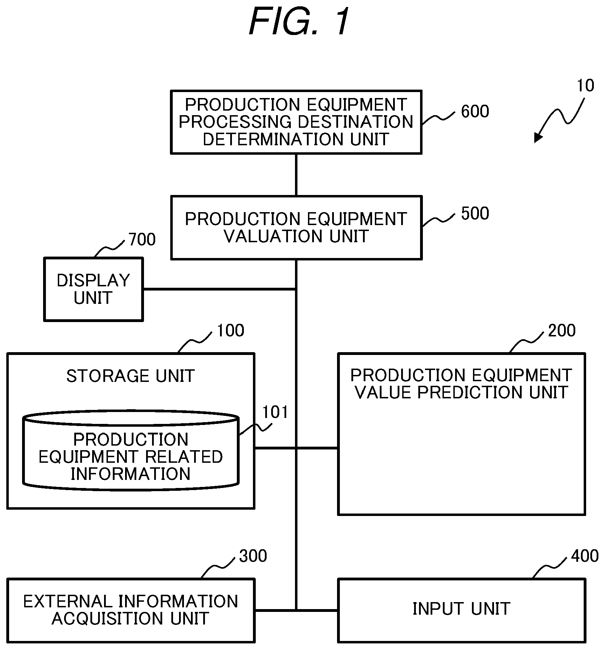

   Fig. 1 is a functional block diagram of a production equipment valuation device 10 according to an embodiment of the present invention.
[Fig. 2]

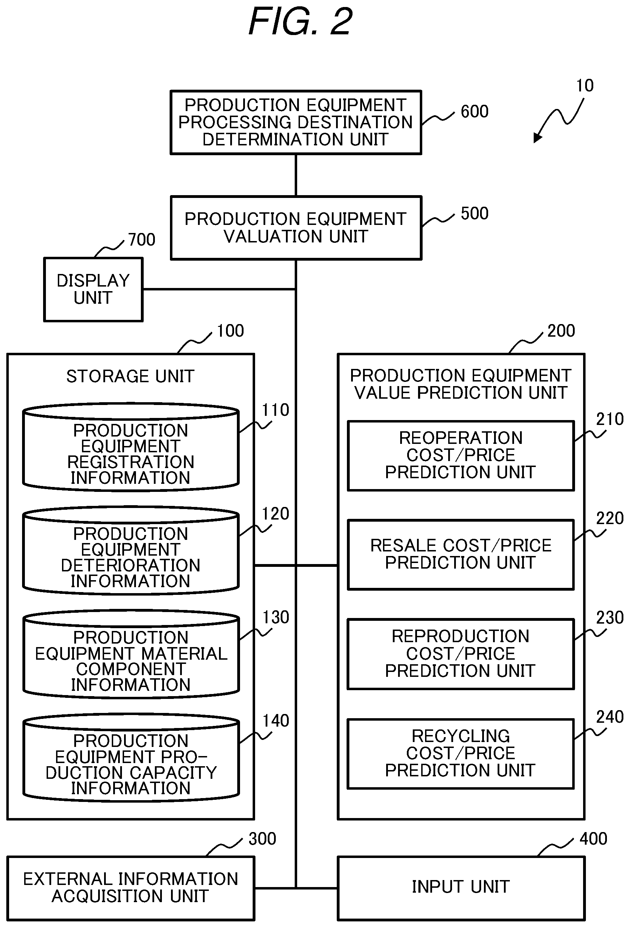

   Fig. 2 is a functional block diagram of the production equipment valuation device 10 according to Example 1.
[Fig. 3]

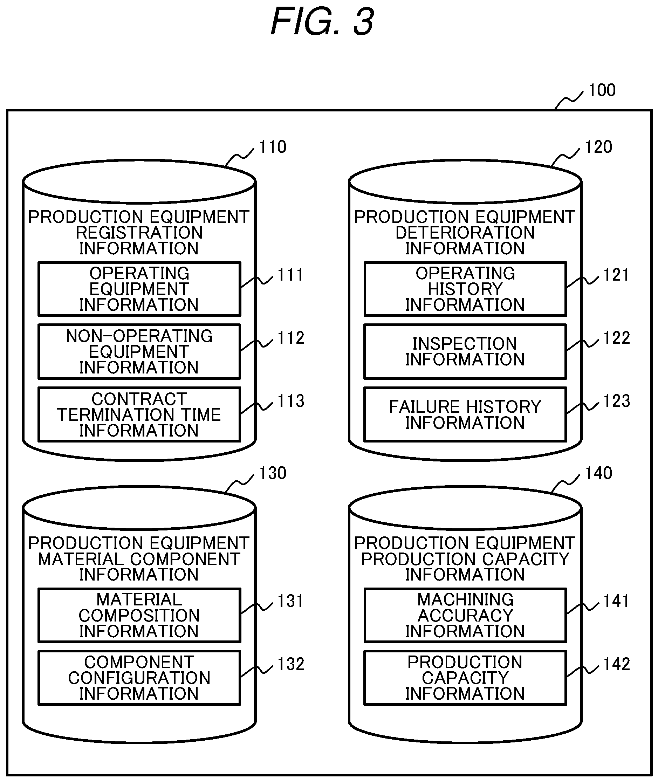

   Fig. 3 is a diagram showing production equipment related information 101 stored in a storage unit 100 according to Example 1.
[Fig. 4]

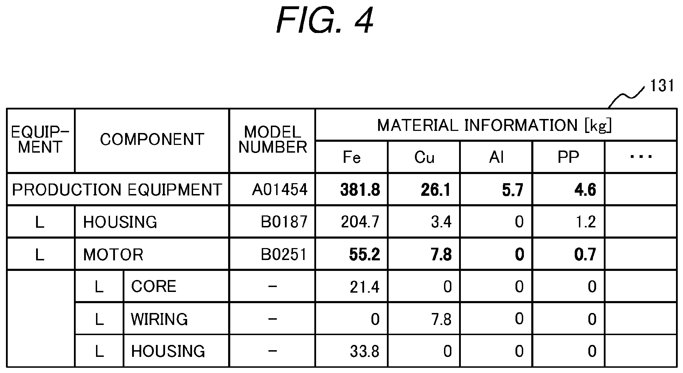

   Fig. 4 is a diagram showing a material composition information 131 according to Example 1.
[Fig. 5]

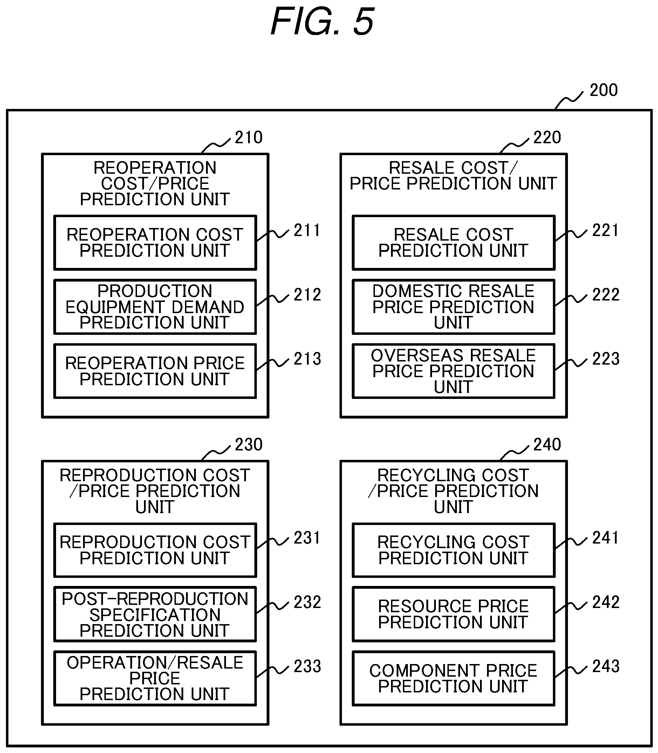

   Fig. 5 is a functional block diagram of a production equipment value prediction unit 200 according to Example 1.
[Fig. 6]

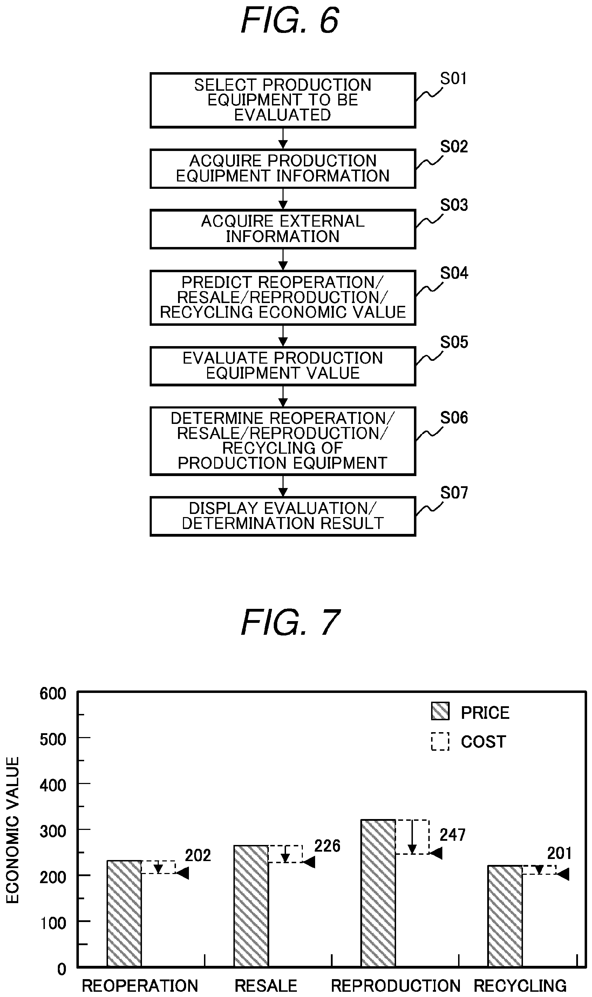

   Fig. 6 is a flowchart showing an operation flow of the production equipment valuation device 10 according to Example 1.
[Fig. 7]
   Fig. 7 is a diagram showing a display screen for evaluation results of the production equipment valuation according to Example 1.
[Fig. 8]

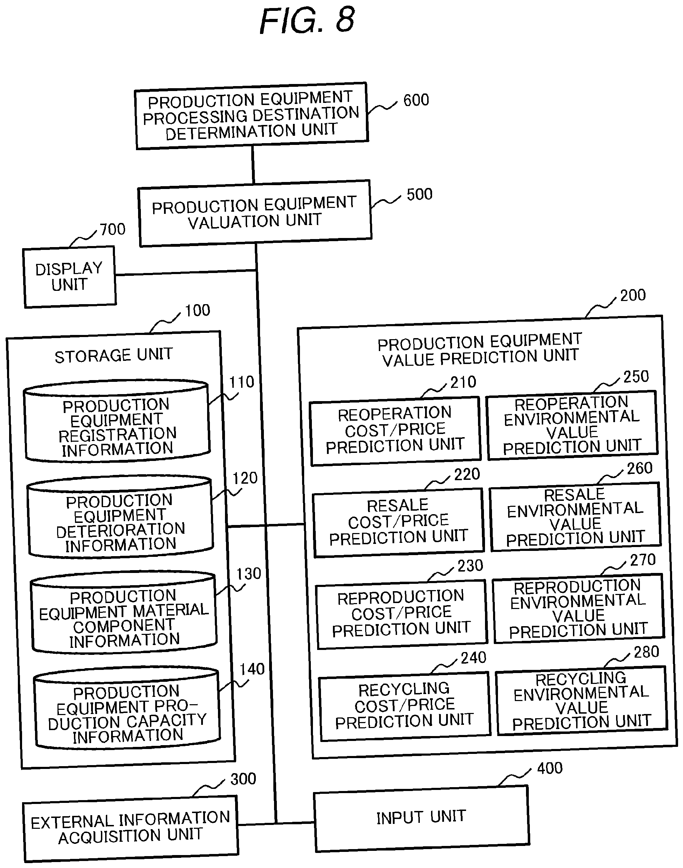

   Fig. 8 is a functional block diagram of a production equipment valuation device 10 according to Example 2.
[Fig. 9]

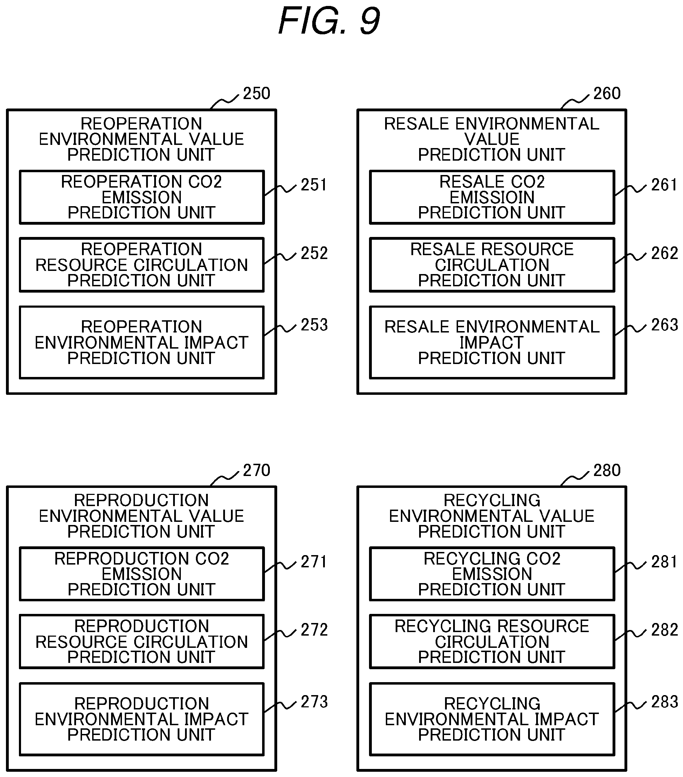

   Fig. 9 is a functional block diagram of a reoperation environmental value prediction unit 250, a resale environmental value prediction unit 260, a reproduction environmental value prediction unit 270, and a recycling environmental value prediction unit 280 according to Example 2.
[Fig. 10]

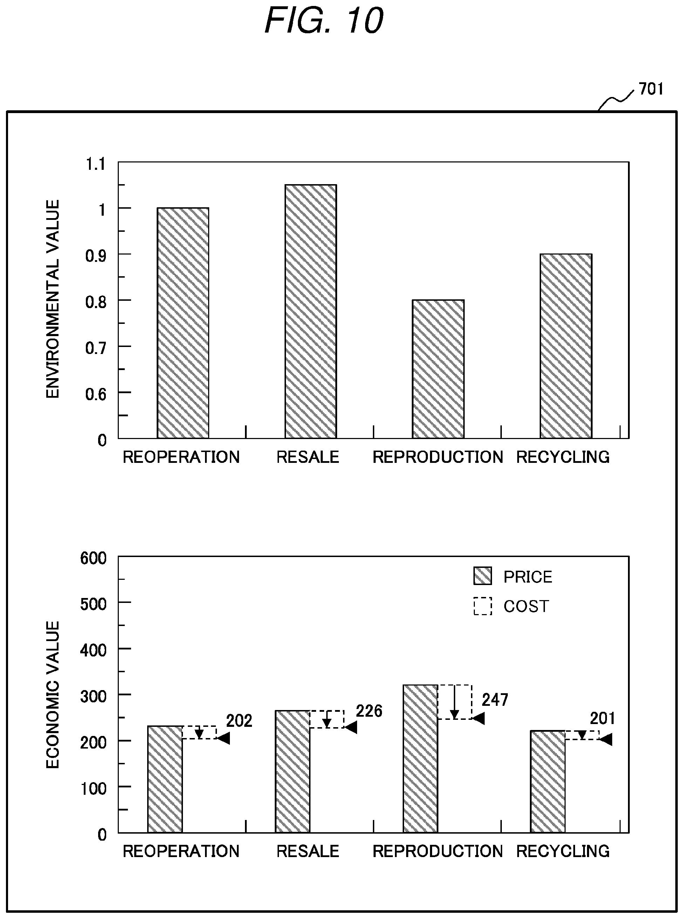

   Fig. 10 is a diagram showing a display screen (part 1) of the production equipment valuation results according to Example 2.
[Fig. 11]

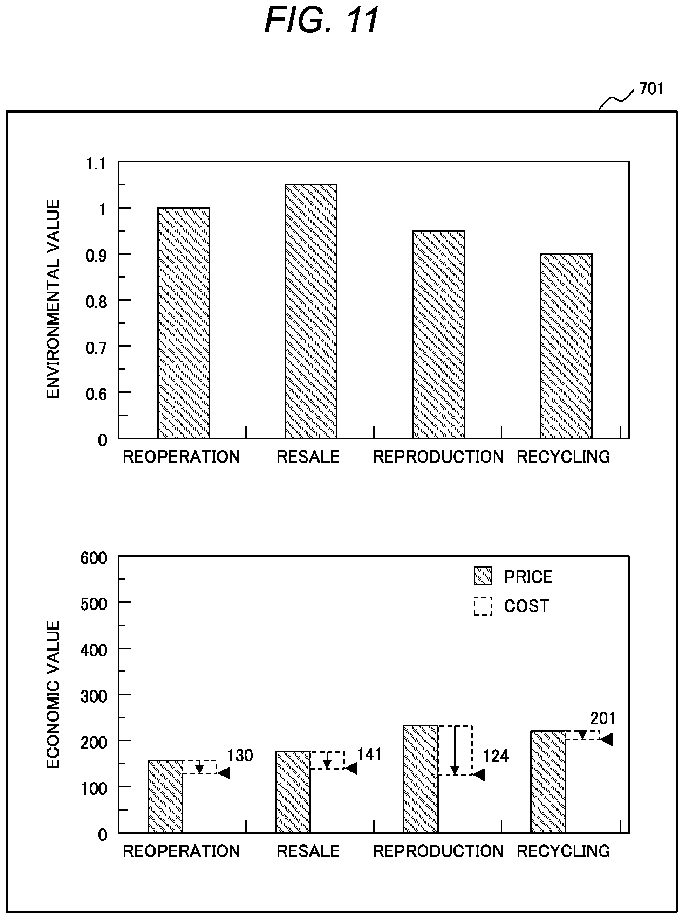

   Fig. 11 is a diagram showing a display screen (part 2) of the production equipment valuation results according to Example 2.
[Fig. 12]

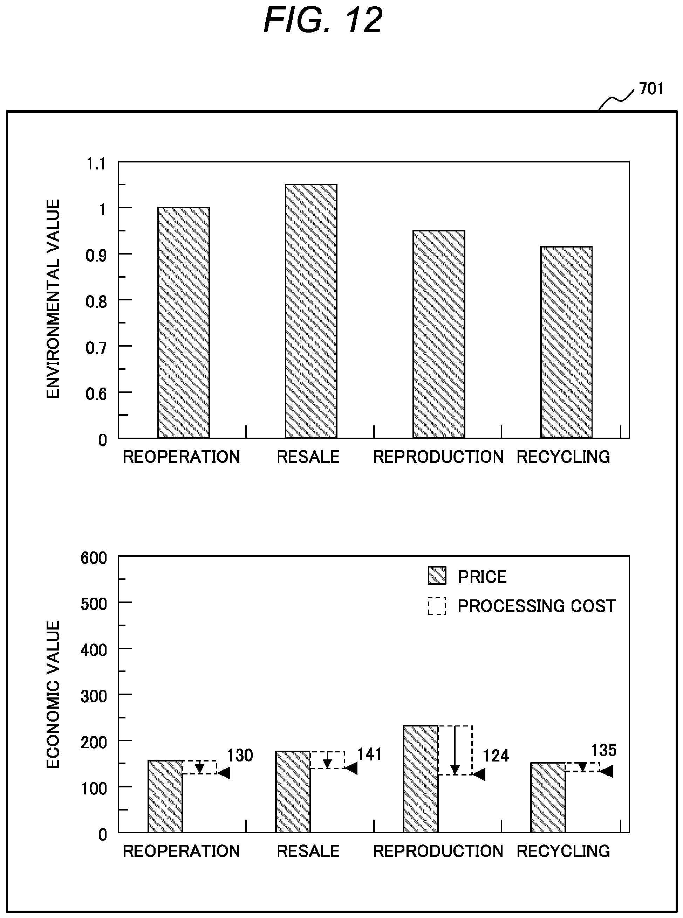

   Fig. 12 is a diagram showing a display screen (part 3) of the production equipment valuation results according to Example 2.
[Fig. 13]

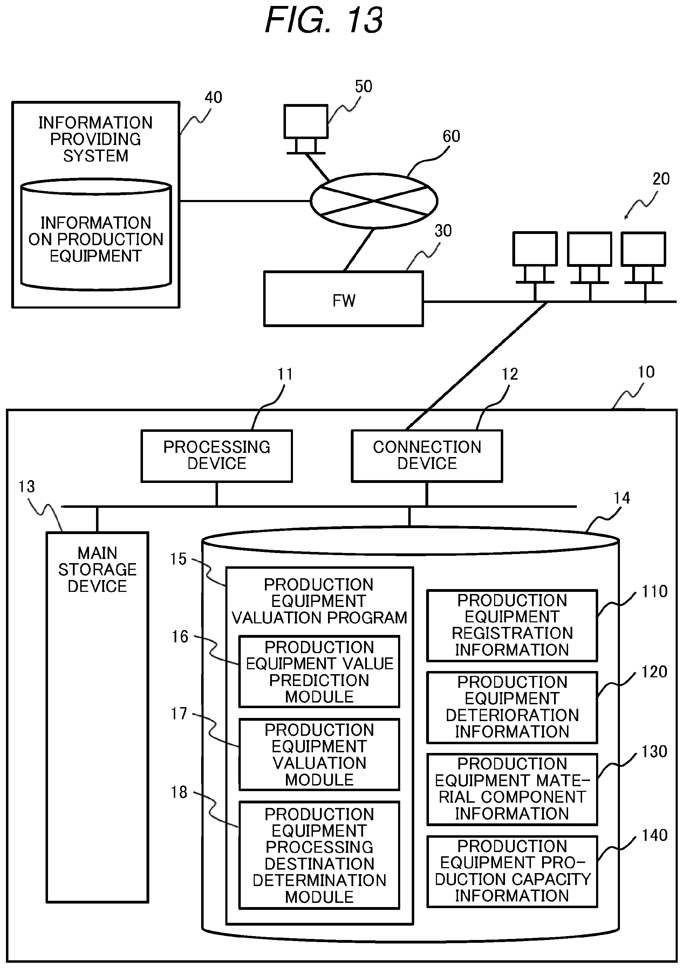

   Fig. 13 is a configuration diagram showing a production equipment valuation system including a production equipment valuation device 10 according to Example 3.

### Description of Embodiments

One embodiment of the present invention will be described below with reference to the accompanying drawings. In the present embodiment, for the production equipment, values in respectively assumed processing are evaluated, and based on the results, those to be presented as processing for the production equipment are specified. Among them, in particular, production equipment that is already installed under lease or the like and that is not in operation or scheduled not to be in operation is targeted. Thus, more appropriate processing for the resting production equipment can be specified. In the present invention, the production equipment includes various devices, apparatus, and instruments related to production.

Fig. 1 is a functional block diagram of the production equipment valuation device 10 in this embodiment. The production equipment valuation device 10 includes a storage unit 100, a production equipment value prediction unit 200, an external information acquisition unit 300, an input unit 400, a production equipment valuation unit 500, a production equipment processing destination determination unit 600, and a display unit 700.

First, the storage unit 100 stores production equipment related information 101. The production equipment related information 101 is information related to production equipment, i.e., candidates for processing. The production equipment related information 101 is managed for each production equipment and indicates a situation thereof. As this situation, actual conditions such as deterioration and failure, and materials and components configuring the relevant production equipment can be used.

Here, the production equipment related information 101 can be classified into production equipment contract operation information, production equipment result information, production equipment material component information, and production equipment catalog information. First, the production equipment contract operation information is information related to a contract related to the use of production equipment such as lease or the like and an operation thereof. The production equipment result information indicates the performance of the production equipment in consideration of aging. The production equipment material component information is information indicating materials and components configuring the production equipment. The production equipment catalog information is information related to performance records according to the catalog of the production equipment or at the start of operation. These pieces of information may be embodied as production equipment registration information 110, production equipment deterioration information 120, production equipment material component information 130, and production equipment production capacity information 140 in each of examples described below, or may be embodied by combinations thereof, or other information. Specific content of the production equipment registration information 110, the production equipment deterioration information 120, the production equipment material component information 130, and the production equipment production capacity information 140 will be described in examples to be described later.

Furthermore, the production equipment value prediction unit 200 predicts "value " for each processing of the production equipment. More preferably, each value is predicted for two or more operations of processing. Here, "reoperation (reuse)", "resale", "reproduction (repair)", and "recycling (recycle)" for the production equipment can be used for the processing. Further, as the value, an economic value that is a monetary value or an environmental value that is a value in an environment can be used. The content of the processing and value will be described in examples to be described later.

The external information acquisition unit 300 acquires information to be used for predicting the value of the production equipment through a network or a portable storage medium. This information includes the production equipment related information 101 per se and part thereof, and information for creating the production equipment related information 101. For this purpose, for example, a trade price (market price information) in a secondhand production equipment market, an operating rate of the production equipment, a manufacturing status (equipment investment index), and the like are used.

The input unit 400 receives various instructions from the user. The content to be input include conditions such as a target production equipment, a time to perform processing, the number of production equipment, and a request destination of processing. Then, in response to a received instruction, processing of the production equipment valuation device 10 such as value prediction is executed. Therefore, the input unit 400 can be realized by an input device such as a mouse or keyboard.

The production equipment valuation unit 500 uses the predicted value to evaluate the value of the production equipment in the processing. For this purpose, the production equipment valuation unit 500 compares values for each of two or more operations of processing, for example.

In addition, the production equipment processing destination determination unit 600 specifies processing of the relevant production equipment according to a processing result in the production equipment valuation unit 500, for example, a comparison result. Note that the specification of the processing includes specification of evaluation results presented on the display unit 700, which will be described later, in addition to uniquely determining the processing. The final processing of the production equipment may be determined according to instructions from the input unit 400 for the presented contents. Further, the display unit 700 can be realized by a display device such as a display. Thus, the input unit 400 and the display unit 700 can be integrally configured like a touch panel. Furthermore, the input unit 400 and the display unit 700 may be configured as separate housings from the production equipment valuation device 10. In this case, the input unit 400 and the display unit 700 may be implemented by different terminal devices.

As a result of the foregoing, in the present embodiment, it is possible to specify a more appropriate destination for the production equipment, and to achieve processing corresponding to the specified contents. Examples 1 and 2, which are more specific aspects, will be described below.

### Example 1

In this example, an example using an economic value as a value of production equipment will be described. Fig. 2 is a functional block diagram of a production equipment valuation device 10 according to Example 1. In Fig. 2, similar to Fig. 1, the production equipment valuation device 10 includes a storage unit 100, a production equipment value prediction unit 200, an external information acquisition unit 300, an input unit 400, a production equipment valuation unit 500, a production equipment processing destination determination unit 600, and a display unit 700.

First, the storage unit 100 stores production equipment registration information 110, production equipment deterioration information 120, production equipment material component information 130, and production equipment production capacity information 140 as the production equipment related information 101. These will be described later with reference to Fig. 3.

Further, the production equipment value prediction unit 200 in this example predicts an economic value as a value for each processing in the production equipment. This economic value indicates the economic value calculated from the cost and price in the processing. Here, the cost means the cost such as a cost in the processing, and the price means a profit such as sales in the processing. To this end, the production equipment value prediction unit 200 includes, for example, a reoperation cost / price prediction unit 210, a resale cost / price prediction unit 220, a reproduction cost / price prediction unit 230 and a recycling cost / price prediction unit 240. These respective units predict the economic value in each processing. For this purpose, each unit calculates costs and prices for the relevant processing and uses the calculated costs and prices to predict its economic value. Furthermore, each unit uses at least one piece of the production equipment related information 101.

First, the reoperation cost / price prediction unit 210 predicts an economic value in the case of reoperating (reusing) the resting production equipment as processing. Also, the resale cost / price prediction unit 220 predicts an economic value in the case of reselling the production equipment to other users or owners as processing. Also, the reproduction cost / price prediction unit 230 predicts the economic value in a case where the production equipment is reproduced (repaired), such as repair as processing. Further, the recycling cost / price prediction unit 240 predicts, as a processing, an economic value in a case where the production equipment is recycled (recycled).

The external information acquisition unit 300 and the input unit 400 have the above-described functions. Also, the production equipment valuation unit 500 performs evaluation of the value of the production equipment as described above. The production equipment valuation unit 500 preferably stores the evaluation result in the storage unit 100.

The production equipment processing destination determination unit 600 determines a target processing destination on the basis of the evaluation result in the production equipment valuation unit 500. In the present example, it is determined which processing of reoperation (reuse), resale, reproduction (repair), and recycling (recycle) for the reproduction equipment is optimal.

The display unit 700 displays at least one of the evaluation result in the production equipment valuation unit 500 and the determination result in the production equipment processing destination determination unit 600.

Next, details of the production equipment related information 101 will be described. Fig. 3 is a diagram showing the production equipment related information 101 stored in the storage unit 100 in Example 1. As shown in Fig. 3, the production equipment related information 101 includes the production equipment registration information 110, the production equipment deterioration information 120, the production equipment material component information 130, and the production equipment production capacity information 140.

First, the production equipment registration information 110 is information related to the operation of the production equipment. For this purpose, the production equipment registration information 110, for example, the production equipment registration information 110 includes operating equipment information 111, non-operating equipment information 112 and contract termination time information 113. First, the operating equipment information 111 indicates basic information on an operating production equipment among the production equipment to be evaluated by the production equipment valuation device 10. For this reason, the operating equipment information 111 includes, for example, items of a manufacturer, a model number, a production equipment manufacturing date, and a past contract history of an operating production equipment.

The non-operating equipment information 112 is basic information on non-operating production equipment among the production equipment to be evaluated. For this reason, the non-operating equipment information 112 includes, for example, items of a manufacturer, a model number, a production equipment manufacturing date, and a past contract history of the non-operating production equipment. The contract termination time information 113 is information indicating a contract related to operation in the production equipment to be evaluated. Therefore, for example, the contract termination time information 113 includes items of the contract termination times of a rental, a lease, and a subscription service of the production equipment.

The production equipment deterioration information 120 indicates the deterioration state of the production equipment to be evaluated. To this end, the production equipment deterioration information 120 includes, for example, operating history information 121, inspection information 122, and failure history information 123. First, the operating history information 121 indicates an operating history in the production equipment to be evaluated. For this purpose, the operating history information 121 has, for example, items of an operating history and a total operation time of the production equipment. The inspection information 122 indicates the result of inspection for the production equipment to be evaluated. To this end, the inspection information 122 includes, for example, terms of appearance, quality, and performance of the production equipment. Furthermore, the failure history information 123 indicates a failure or the like in the production equipment to be evaluated, and for this purpose, the failure history information 123 includes, for example, items of the number, time, and type of failures of the production equipment.

The production equipment material component information 130 indicates materials and components configuring the production equipment to be evaluated. For this purpose, for example, the production equipment material component information 130 has material composition information 131 and component configuration information 132.

First, the material composition information 131 indicates materials configuring the production equipment to be evaluated. For this purpose, the material composition information 131 includes, for example, items of material composition, decomposability, and recoverability of components used in the production equipment. The component configuration information 132 indicates components configuring the production equipment to be evaluated. To this end, the component configuration information 132 has, for example, items of the component configuration and the reusability of the component used in the production equipment.

In addition, the component configuration information 132 indicates the production capacity of the production equipment to be evaluated. For this purpose, the production equipment production capacity information 140 has, for example, machining accuracy information 141 and production capacity information 142. The machining accuracy information 141 indicates machining accuracy in machining in the production equipment to be evaluated. For this purpose, the machining accuracy information 141 has, for example, items of an initial machining accuracy and a current machining accuracy of the production equipment. The production capacity information 142 indicates production capacity such as the number of products to be produced in the production equipment to be evaluated. For this purpose, the production capacity information 142 has, for example, items of an initial production capacity and a current production capacity of the production equipment.

Specific contents of the production equipment related information 101 will now be described with reference to the material composition information 131. Fig. 4 is a diagram showing the material composition information 131 in Example 1. In Fig. 4, the material composition information 131 includes items of components, model numbers, material information for each production equipment. The components show the components that configure the target production equipment in a hierarchical manner. The model numbers also indicate the model number of production equipment and components. Further, the material information indicates the content of each material (element or material) configuring the production equipment or component. Note that a component in the material composition information 131 illustrated in Fig. 4 may be used as the component configuration information 132. Also, the items of the components of the material composition information 131 may be omitted. Thus, the description of the production equipment related information 101 is completed.

Next, the production equipment value prediction unit 200 of Example 1 will be described. Fig. 5 is a functional block diagram of the production equipment value prediction unit 200 in Example 1. As described above, the production equipment value prediction unit 200 includes the reoperation cost / price prediction unit 210, the resale cost / price prediction unit 220, the reproduction cost / price prediction unit 230, and the recycling cost / price prediction unit 240 in order to predict the economic value for each processing of the production equipment to be evaluated.

First, the reoperation cost / price prediction unit 210 predicts an economic value in the case of reoperating (reusing) a resting production equipment. To this end, the reoperation cost / price prediction unit 210 includes, for example, a reoperation cost prediction unit 211, a production equipment demand prediction unit 212, and a reoperation price prediction unit 213. The reoperation cost / price prediction unit 210 predicts office costs and transportation costs in reoperation of the production equipment. The production equipment demand prediction unit 212 also predicts the specifications and the number of demand equipment of the production equipment that is in demand. The reoperation price prediction unit 213 predicts sales and profit in reoperation on the basis of the production equipment demand prediction unit 212 and the production equipment related information 101.

Also, the resale cost / price prediction unit 220 predicts an economic value in the case of reselling the production equipment to other users or owners as processing. For this purpose, the resale cost / price prediction unit 220 includes, for example, a resale cost prediction unit 221, a domestic resale price prediction unit 222, and an overseas resale price prediction unit 223.

First, the resale cost prediction unit 221 predicts office costs and transportation costs in reselling the production equipment to be evaluated. The domestic resale price prediction unit 222 predicts a resale price of the production equipment to be evaluated in Japan on the basis of a domestic used production equipment price database. The overseas resale price prediction unit 223 predicts a resale price of the production equipment to be evaluated on the basis of overseas used production equipment price database.

Also, the reproduction cost / price prediction unit 230 predicts the economic value in a case where the production equipment is reproduced (repaired), such as repair, as processing. To this end, the reproduction cost / price prediction unit 230 includes, for example, a reproduction cost prediction unit 231, a post-reproduction specification prediction unit 232, and an operation / resale price prediction unit 233. First, the reproduction cost prediction unit 231 grasps a reproducible component in the production equipment to be evaluated on the basis of the production equipment related information 101, and predicts a cost required for reproducing the component.

Further, the post-reproduction specification prediction unit 232 predicts the production equipment specification after reproducing the components of the production equipment to be evaluated. The operation / resale price prediction unit 233 predicts the operation / resale price of the production equipment on the basis of the production equipment specification after reproducing the production equipment to be evaluated. That is, the operation / resale price prediction unit 233 predicts an economic value in the case of reoperating (resourcing) the reproduced production equipment or an economic value in the case of reselling.

Further, the recycling cost / price prediction unit 240 predicts, as processing, an economic value in a case where the production equipment is recycled (recycled). To this end, the recycling cost / price prediction unit 240 includes, for example, a recycling cost prediction unit 241, a resource price prediction unit 242, and a component price prediction unit 243. First, the recycling cost prediction unit 241 predicts the cost required for recycling of the target single or multiple production equipment. The resource price prediction unit 242 also predicts the price of the resource in the case of recycling the production equipment to be evaluated on the basis of the production equipment material component information 130 and the market price information of the relevant resource. The component price prediction unit 243 predicts the price of a component configuring the production equipment to be evaluated on the basis of the production equipment material component information 130 and the market price information of the component. Thus, the description of the production equipment value prediction unit 200 is completed.

Next, an operation flow in Example 1 will be described. Fig. 6 is a flow chart showing the operation flow of the production equipment valuation device 10 in Example 1. First, in step S01, the production equipment value prediction unit 200 selects one or more production equipment to be evaluated according to user's operation using an input unit 400 or preset in a storage unit 100. In this step, the production equipment value prediction unit 200 specifies two or more candidates for processing of the selected production equipment according to the user's operation using the input unit 400. Note that these may be selected and specified according to information previously set in the storage unit 100.

Note that each processing in this step may be performed in any of the reoperation cost / price prediction unit 210, the resale cost / price prediction unit 220, the reproduction cost / price prediction unit 230, and the recycling cost / price prediction unit 240 in the production equipment value prediction unit 200.

In step S02, the production equipment value prediction unit 200 acquires the production equipment related information 101 of the production equipment selected in step S01 from the storage unit 100. This step is executed by a prediction unit for predicting the economic value of the candidate for the processing specified in step S01 among the production equipment value prediction unit 200. For example, in a case where "reoperation (reuse)" and "reproduction (repair)" are specified in step S01, the reoperation cost / price prediction unit 210 and the reproduction cost / price prediction unit 230 execute step S02.

Also, in step S03, the production equipment value prediction unit 200 acquires information that is deficient in the production equipment related information 101 acquired in step S02 among the information used to predict the economic value of the production equipment selected in step S01 through the external information acquisition unit 300. Here, the deficient information includes, for example, a trade price (market price information) of the production equipment in a used market, and so on. The processing of this step is executed by a prediction unit for executing step S02.

Also, in step S04, the production equipment value prediction unit 200 uses the production equipment related information 101 and deficient information acquired in steps S02 and S03 to predict the economic value in the relevant processing among reoperation, resale, reproduction, and recycling. To this end, the production equipment value prediction unit 200 calculates costs and prices in the relevant processing. The production equipment value prediction unit 200 then calculates a difference between the price and the cost, and then predicts the economic value according to the difference. The processing of this step is also executed by a prediction unit for executing step S02 and step S03.

In step S05, the production equipment valuation unit 500 evaluates the two or more economic values predicted in step S04. That is, the production equipment valuation unit 500 compares two or more economic values and specifies a magnitude relationship thereof. This specification includes the sequencing of economic values and the specification of which processing should be prioritized.

Also, in step S06, the production equipment processing destination determination unit 600 determines the processing of the production equipment, for example, the optimal processing among reoperation, resale, reproduction, and recycling, by using the evaluation result of the production equipment valuation unit 500. For this purpose, the production equipment processing destination determination unit 600 may, for example, specify the processing having the largest economic value or specify the processing showing the economic value equal to or greater than a predetermined value. Further, in this step, the production equipment processing destination determination unit 600 may specify candidates for processing the production equipment. In this case, the processing will be specified from the candidate in a subsequent step.

In step S07, the production equipment valuation unit 500 and the production equipment processing destination determination unit 600 display the evaluation result and the determination result on the display unit 700. In this step, one of the evaluation result and the determination result may be displayed. In a case where a candidate for processing is specified in step S06, the production equipment processing destination determination unit 600 receives specific designation of the user using the input unit 400. As a result, the production equipment processing destination determination unit 600 specifies processing in accordance with the specific designation. Note that, the specific designation includes holding and rejection, and in a case where these are designated, the production equipment processing destination determination unit 600 determines that there is no recommended processing. Although the description of the flow chart is finished, it is desirable for each processing entity to record the results of steps S04 to S07 in the storage unit 100. Further, in this example and each of examples described later, the production equipment value prediction unit 200 may predict values in two or more operations of processing including at least recycling.

Next, display on the display unit 700 in step S07 will be described. Fig. 7 is a diagram illustrating a display screen of a production equipment evaluation result in Example 1. In the production equipment valuation evaluation result, production equipment having a manufacturing date of less than five years is targeted, and the economic value is displayed for reoperation (reuse), resale, reproduction (repair), and recycling (recycle) as a candidate for processing.

Then, as the economic value in Fig. 7, the price and cost calculated in step S04, and the economic value predicted by subtracting the cost from the price are displayed. That is, the calculated price is shown in a hatched bar graph, and the economic value obtained by subtracting the cost (downward arrow) calculated from the bar graph is indicated by a numerical value and a triangular arrow. For example, for reoperation, 202 is displayed as the economic value. Note that in the example shown in Fig. 7, in a case where reproduction is selected as the processing, it can be seen that the reproduction is the most economical (247). Note that the display unit 700 may display the most economical processing separately from other processing. In this case, the display unit 700 may display the most economical processing in a limited manner. In Fig. 7, the candidates for each processing are displayed, but the display unit 700 may display the processing determined as the final processing in a limited manner.

It should be noted that these results vary depending on the number of selected production equipment and the time of evaluation, and the increase in the number of production equipment assumes a decrease in transportation cost and a decrease in reproduction and recycling costs. Furthermore, because the number of production equipment to be evaluated is large, it is assumed that the demand for a company requiring a large number of components and materials is met and that the recycling price is increased. Furthermore, the evaluation time changes to expect an increase or decrease in production equipment value, resource value, and component value in the market, and the evaluation result changes.

Although the description of Example 1 is finished with the above, in Example 1, it is possible to specify the processing of the production equipment in consideration of economic values.

### Example 2

Although the economic value is used as the value to evaluate the production equipment in Example 1, this example further evaluates an environmental aspect to specify the processing. The configuration of this example will be described mainly with respect to the differences from Example 1. Fig. 8 is a functional block diagram of a production equipment valuation device 10 in Example 2. The production equipment valuation device 10 of Example 2 differs from that of Example 1 in the configuration of a production equipment value prediction unit 200. That is, as compared to Example 1, the production equipment value prediction unit 200 further includes a reoperation environmental value prediction unit 250, a resale environmental value prediction unit 260, a reproduction environmental value prediction unit 270, and a recycling environmental value prediction unit 280. As a result, the production equipment valuation device 10 of Example 2 also predicts the environmental value in each processing of the target production equipment. This configuration will be described below.

Fig. 9 is a functional block diagram of the reoperation environmental value prediction unit 250, the resale environmental value prediction unit 260, the reproduction environmental value prediction unit 270, and the recycling environmental value prediction unit 280 in Example 2.
The reoperation environmental value prediction unit 250, the resale environmental value prediction unit 260, the reproduction environmental value prediction unit 270, and the recycling environmental value prediction unit 280 predict an environmental impact included in the environmental value of the production equipment to be described below and used to calculate the environmental value. This environmental impact is an index showing the effect on the environment, and in this example, the larger the value of the impact of the environmental value and the larger the environmental value, the more the adverse effect on the environment is. That is, negative is indicated as the value.

First, the reoperation environmental value prediction unit 250 includes a reoperation CO2 emission prediction unit 251, a reoperation resource circulation prediction unit 252, and a reoperation environmental impact prediction unit 253. Among the above units, the reoperation CO2 emission prediction unit 251 predicts a reduction in CO2 emission due to reoperation of the production equipment to be evaluated and an increase in CO2 emission due to transportation. Also, the reoperation resource circulation prediction unit 252 predicts resource circulation improvement due to life improvement of the production equipment to be evaluated. The reoperation environmental impact prediction unit 253 also predicts an impact on the environment, such as a climatic variation and resource circulation, due to the reoperation of the production equipment to be evaluated.

The resale environmental value prediction unit 260 includes a resale CO2 emission prediction unit 261, a resale resource circulation prediction unit 262, and a resale environmental impact prediction unit 263. First, the resale CO2 emission prediction unit 261 predicts reduction in CO2 emission by reusing production equipment to be evaluated at a resale destination and increase in CO2 emission by transportation. The resale resource circulation prediction unit 262 also predicts resource circulation improvement due to life improvement of the production equipment to be evaluated. The resale environmental impact prediction unit 263 also predicts an impact on the environment, such as a climatic variation and resource circulation due to resale of the production equipment to be evaluated.

The reproduction environmental value prediction unit 270 includes a reproduction CO2 emission prediction unit 271, a reproduction resource circulation prediction unit 272, and a reproduction environmental impact prediction unit 273. First, the reproduction CO2 emission prediction unit 271 predicts CO2 emission reduction by an improvement in the performance of the production equipment due to reproduction of the production equipment to be evaluated, and CO2 emission increase by transfer and reproduction processing. The reproduction resource circulation prediction unit 272 also predicts improvement in resource circulation by reproducing / continuously using the production equipment to be evaluated. The reproduction environmental impact prediction unit 273 also predicts an impact on the environment such as climatic variation and resource circulation due to reproduction.

The recycling environmental value prediction unit 280 includes a recycling CO2 emission prediction unit 281, a recycling resource circulation prediction unit 282, and a recycling environmental impact prediction unit 283. First, the recycling CO2 emission prediction unit 281 predicts a decrease in CO2 emission due to recycling of the production equipment to be evaluated and an increase in CO2 emission due to the recycling processing. Further, the recycling resource circulation prediction unit 282 performs prediction of improvement in resource circulation due to reuse of materials in recycling the production equipment to be evaluated. Further, the recycling environmental impact prediction unit 283 predicts an impact on the environment such as a climatic change or resource circulation due to recycling of the production equipment to be evaluated. Thus, the description of the configuration of this example is completed.

Next, the operation flow in Example 2 will be described. The operation flow of Example 2 is basically the same as that of Example 1. However, since some of the contents are different, the operation flow of Example 2 will be described with reference to Fig. 6.

Steps S01 and S02 perform the similar processing to that of Example 1.

In step S03, the production equipment value prediction unit 200 acquires information related to the environment as deficient information. For example, an environmental report or the like of a public institution is acquired.

In step S04, the production equipment value prediction unit 200 predicts an environmental consideration value including an environmental value. For this reason, the reoperation cost / price prediction unit 210, the resale cost / price prediction unit 220, the reproduction cost / price prediction unit 230, and the recycling cost / price prediction unit 240 predict the economic value in the similar manner to that of Example 1. Further, the environmental value of the target production equipment is predicted by the reoperation environmental value prediction unit 250, the resale environmental value prediction unit 260, the reproduction environmental value prediction unit 270, and the recycling environmental value prediction unit 280. In this case, among the reoperation environmental value prediction unit 250, the resale environmental value prediction unit 260, the reproduction environmental value prediction unit 270, and the recycling environmental value prediction unit 280, two or more units that predict the environmental values in the same processing as the processing of environmental values are operated.

Here, two or more of the reoperation environmental value prediction unit 250, the resale environmental value prediction unit 260, the reproduction environmental value prediction unit 270, and the recycling environmental value prediction unit 280 predict the respective environmental impacts described above. Then, in any of the reoperation environmental value prediction unit 250, the resale environmental value prediction unit 260, the reproduction environmental value prediction unit 270, and the recycling environmental value prediction unit 280, the environmental value of the production equipment is predicted by using each environmental impact. For example, the environmental value can be predicted from the sum of each environmental impact. It is also possible to prepare a predetermined formula and predict the environmental value using each environmental impact as a parameter. Then, the production equipment value prediction unit 200 uses the economic value and the environmental value to predict an environmental consideration value. The environmental consideration value can be predicted, for example, by a difference or sum or product of the economic value and the environmental value. Also, the environmental consideration value will be predicted for the environmental consideration value in the above two or more operations of processing.

In step S05, the production equipment valuation unit 500 evaluates the two or more environmental consideration values predicted in step S04. That is, the production equipment valuation unit 500 compares two or more environmental consideration values and specifies a magnitude relationship thereof. This specification includes sequencing of environmental consideration values and specifying which processing should be prioritized. In step S06, the production equipment processing destination determination unit 600 determines the processing of the production equipment by using the evaluation result of the production equipment valuation unit 500, that is the evaluation result for the environmental consideration value. Then, in step S07, the production equipment valuation unit 500 and the production equipment processing destination determination unit 600 display the evaluation result and the determination result on the display unit 700. This display will be described below.

The display of evaluation results for three production equipment that differ in the course from the date of manufacture will be described below. Fig. 10 is a diagram showing a display screen (part 1) of the production equipment valuation results in Example 2. Fig. 10 is directed to multiple production equipment less than 5 years of manufacture. On the display screen 701, the evaluation result of the environmental value based on the environmental impact is shown in an upper portion, and the evaluation result of the economic value is shown in a lower portion.

According to the evaluation result of the environmental value shown in Fig. 10, resale increases in the numeral value of environmental values, that is, adverse effects on the environment, due to an increase in CO2 emission and a deterioration in resource circulation, as compared with reoperation. In addition, reproduction improves the performance of the production equipment and reuses the production equipment, which results in a decrease in environmental value, that is, adverse effects on the environment, because of high CO2 emission and high resource circulation. In addition, the recycling has higher CO2 emission and resource circulation than the reoperation, but since the CO2 emission amount in the processing step increases in the recycling of returning components to materials than in the reproduction, the recycling has a higher environmental value, that is, has a higher adverse effect on the environment than the reproduction. Furthermore, since the environmental value of reproduction is the lowest and the economic value of reproduction is the highest, it can be determined that reproduction is optimal as the processing destination of the production equipment. This determination may be performed according to the result of the user's visual observation of the display screen 701, or may be performed by the production equipment processing destination determination unit 600 using the economic value and environmental value of each processing.

Next, Fig. 11 is a diagram showing a display screen (part 2) of the production equipment valuation result in Example 2. Fig. 11 focuses on multiple production equipment manufactured 10 years or more ago. In the same manner as in Fig. 10, the display screen 701 shows the evaluation results of the environmental value based on the environmental impact in an upper portion and the evaluation results of the economic value in a lower portion. Here, the production equipment manufactured 10 years or more ago is lower in performance than new production equipment (5 years) as shown in Fig. 10, resulting in a reduction in reoperation value and the resale value. Further, the cost required for reproduction is increased, and performance improvement after reproduction is limited, so that environmental value is increased and reproduction value is also decreased. Thus, the user can understand that the target production equipment has relatively high values of resources and components provided by the production equipment, and high values as resources.

Next, Fig. 12 is a diagram showing a display screen (part 3) of the production equipment valuation result in Example 2. Fig. 12 focuses on single production equipment manufactured 10 years or more ago. Similar to Figs. 10 and 11, on the display screen 701, the evaluation results of environmental values based on environmental impact are shown in an upper portion and the evaluation results of economic values are shown in a lower portion. Here, in the case of single production equipment of this example, it becomes difficult to classify components and materials by recycling as compared with a plurality of production equipment shown in Fig. 11, and it is not possible to recover components and expensive materials because they are crushed without much classification. As a result, the resale value is higher because the recycling value is lowered.

Although the description of the display of Example 2 is finished with the above, how to display is not limited to the above. For example, the evaluation results of the environmental value and the economic value may be collectively displayed as one evaluation result indicating the environmental consideration value, or the evaluation result of the environmental consideration value may be added and displayed in each of Figs. 10 to 12. Further, although the environmental impact and environmental value of Example 2 have been set to a larger value as the adverse effect on the environment is larger, they may be reversed. That is, the larger the adverse effect on the environment, the smaller the value may be.

### [Example 3]

Example 3 shows an example in which a production equipment valuation device 10 of the above-described embodiment and Examples 1 and 2 is implemented on a server computer. Fig. 13 is a block diagram showing a production equipment valuation system including a production equipment valuation device 10 in Example 3. In Fig. 13, a production equipment valuation device 10 is connected to a terminal device group 20 through a private network or the like to configure a production equipment valuation system. The production equipment valuation system is connected to an information providing system 40 and a customer terminal device 50 through a firewall 30 and a wide area network 60 such as the Internet. Each device will be described below.

First, Fig. 13 shows the hardware configuration of the production equipment valuation device 10. The production equipment valuation device 10 includes a processing device 11, a connection device 12, a memory 13, and a sub-storage device 14, and these components are connected to each other through a communication path.

First, the processing device 11 can be implemented by a processor such as a CPU (Central Processing Unit), and executes calculation in accordance with a production equipment valuation program 15 stored in a sub-storage device 14, which will be described later.

The connection device 12 has a function of interfacing with other devices and corresponds to the external information acquisition unit 300 shown in Figs. 1, 2 and 8. The memory 13 and the sub-storage device 14 correspond to the storage unit 100 of Figs. 1, 2 and 8. Then, the memory 13 expands the production equipment valuation program 15 stored in the sub-storage device 14 and information used for processing in the processing device 11. The sub-storage device 14 can be realized by a so-called storage. Then, the sub-storage device 14 stores, as the production equipment valuation program 15 and the production equipment related information 101, for example, production equipment registration information 110, production equipment deterioration information 120, production equipment material component information 130, and production equipment production capacity information 140. Further, the sub-storage device 14 can be realized by various storage media such as an external hard disk drive (HDD), a solid state drive (SSD), and a memory card. Further, the sub-storage device 14 may be realized by a device different from the production equipment valuation device 10, such as a file server.

Here, the production equipment valuation program 15 includes, for each function, a production equipment value prediction module 16, a production equipment valuation module 17, and a production equipment processing destination determination module 18. Each of these modules may be implemented by an individual program or a partial combination thereof.

The configuration shown in Figs. 1, 2 and 8 for executing the same functions as those of the modules are as follows.
Production equipment value prediction module 16: Production equipment value prediction unit 200
Production equipment valuation module 17: Production equipment valuation unit 500
Production equipment processing destination determination module 18: Production equipment processing destination determination unit 600

Therefore, the processing device 11 executes processing of the production equipment value prediction unit 200, the production equipment valuation unit 500, and the production equipment processing destination determination unit 600 in the embodiment of the present invention and Examples 1 and 2 according to the production equipment valuation program 15. The production equipment valuation program 15 can be stored on a storage medium.

The terminal device group 20 is a terminal group operated by a user and can be implemented by a computer. The terminal device group 20 has the input unit 400 and the display unit 700 shown in Figs. 1, 2 and 8. In this example, the terminal device group is provided, but a single terminal device may be provided. The firewall 30 is provided between the production equipment valuation system and the wide area network 60 to prevent unauthorized access to the production equipment valuation system.

The information providing system 40 is a computer system that stores and provides information related to production equipment. That is, the information providing system 40 has a function of providing the external information of step S03 in Fig. 6. The customer terminal device 50 is a terminal device used by a customer who uses the production equipment to be evaluated. The customer terminal device 50 receives the evaluation result by the production equipment valuation device 10 and can perform the display as shown in Figs. 7 and 10 to 12. Further, it is desirable that a customer terminal device 50 has the input unit 400 and the display unit 700 shown in Figs. 1, 2 and 8, similar to the terminal device group 20. Note that the display in Figs. 7 and 10 to 12 may be limited to the customer terminal device 50 for the production equipment that are being used or leasing by itself. Although the production equipment valuation device 10 is constructed as a dedicated device in a company or the like in this example, it may be constructed as a so-called cloud system.

An example of evaluation processing using the customer terminal device 50 will now be described. Here, in response to an inquiry from the customer, values in reoperation and reproduction for the production equipment are predicted on the basis of the production capacity of the production equipment to be evaluated. The customer has a lease of the production equipment, and reoperation and reproduction are desirable for the customer's processing. For this reason, reoperation and reproduction are used as processing candidates. However, processing candidates are not limited to these, and processing that customers can handle can be used as candidates. The contents of the processing will be described below.

First, the customer terminal device 50 asks the customer about the production equipment that the customer is using or leasing, that is, receives an evaluation request. Then, the customer terminal device 50 notifies the production equipment valuation device 10 of the evaluation request.

The connection device 12 of the production equipment valuation device 10 receives the evaluation request. Then, the processing device 11 specifies the production capacity of the production equipment from the production equipment production capacity information 140 according to the production equipment valuation program 15 (production equipment value prediction module 16). As a result, the machining accuracy and the production capacity (supply power) of the relevant production equipment are specified.

The processing device 11 also predicts values in reoperation and reproduction for the production equipment on the basis of the production capacity according to the production equipment valuation program 15 (production equipment value prediction module 16).

The above processing in the processing device 11 is executed by the reoperation cost / price prediction unit 210 and the reproduction cost / price prediction unit 230 in Fig. 2. Also, in the configuration shown in Fig. 8, further in the configuration shown in Fig. 8, the processing is executed by the reoperation environmental value prediction unit 250 and the reproduction environmental value prediction unit 270 in addition to the above units.

The processing device 11 compares predicted values in the reoperation and reproduction according to the production equipment valuation program 15 (production equipment valuation module 17). This processing is executed by the production equipment valuation unit 500 shown in Figs. 1, 2 and 8.

Then, the processing device 11 selects, from reoperation and reproduction, processing of the production equipment in response to the above-described comparison result according to the production equipment valuation program 15 (production equipment processing destination determination module 18). In this case, it is desirable to select more valuable processing. This selection is executed by the production equipment processing destination determination unit 600 in Figs. 2 and 8. The description of Example 3 is thus completed.

Note that the present invention is not limited to the above examples, and various modifications are included. For example, the above examples have been described in detail in order to explain the present invention in an easy-to-understand manner, and are not necessarily limited to those provided with all the configurations described. It is also possible to replace a portion of the configuration of one example with the configuration of another example, and to add the configuration of another example to the configuration of one example. Further, some of the configurations of each example can be added, deleted, or substituted for other configurations.

In addition, according to the above-described examples, it is possible to predict the economic value and the environmental value including the reoperation, resale, reproduction, and recycling of the product, and to determine the processing destination at which the economic value and the environmental value are optimized. In addition, since the cost of reproduction and recycling increases when the product distribution amount is small, it is possible to determine a processing destination in which the economic value and the environmental value including reoperation, resale, reproduction, and recycling are optimized, including cost reduction by reproducing and recycling a plurality of products at the same time.

### Reference Signs List

- 10: Production equipment valuation device
- 100: Storage unit
- 101: Production equipment related information
- 110: Production equipment registration information
- 111: Operating equipment information
- 112: Non-operating equipment information
- 113: Contract termination time information
- 120: Production equipment deterioration information
- 121: Operating history information
- 122: Inspection information
- 123: Failure history information
- 130: Production equipment material component information
- 131: Material composition information
- 132: Component configuration information
- 140: Production equipment production capacity information
- 141: Machining accuracy information
- 142: Production capacity information
- 200: Production equipment value prediction unit
- 210: Reoperation cost / price prediction unit
- 211: Reoperation cost prediction unit
- 212: Production equipment demand prediction unit
- 213: Reoperation price prediction unit
- 220: Resale cost / price prediction unit
- 221: Resale cost prediction unit
- 222: Domestic resale price prediction unit
- 223: Overseas resale price prediction unit
- 230: Reproduction cost / price prediction unit
- 231: Reproduction cost prediction unit
- 232: Post-reproduction specification prediction unit
- 233: Operation / resale price prediction unit
- 240: Recycling cost / price prediction unit
- 241: Recycling cost prediction unit
- 242: Resource price prediction unit
- 243: Component price prediction unit
- 250: Reoperation environmental value prediction unit
- 251: Reoperation CO2 emission prediction unit
- 252: Reoperation resource circulation prediction unit
- 253: Reoperation environmental impact prediction unit
- 260: Resale environmental value prediction unit
- 261: Resale CO2 emission prediction unit
- 262: Resale resource circulation prediction unit
- 263: Resale environmental impact prediction unit
- 270: Reproduction environmental value prediction unit
- 271: Reproduction CO2 emission prediction unit
- 272: Reproduction resource circulation prediction unit
- 273: Reproduction environmental impact prediction unit
- 280: Recycling environmental value prediction unit
- 281: Recycling CO2 emission prediction unit
- 282: Recycling resource circulation prediction unit
- 283: Recycling environmental impact prediction unit
- 300: External information acquisition unit
- 400: Input unit
- 500: Production equipment valuation unit
- 600: Production equipment processing destination determination unit
- 700: Display unit

## Claims

1. A production equipment valuation device for evaluating production equipment, the device comprising:
a storage unit that stores production equipment related information related to the production equipment;
a production equipment value prediction unit that predicts values in two or more operations of processing for the production equipment;
a production equipment valuation unit that compares predicted values in the two or more operations of processing; and
a production equipment processing destination determination unit that determines processing in the production equipment from the two or more operations of processing in accordance with a comparison result by the production equipment valuation unit.

2. The production equipment valuation device according to claim 1,
wherein the production equipment value prediction unit predicts, as the values, values in at least two from among reoperation, resale, reproduction, and recycling for the production equipment.

3. The production equipment valuation device according to claim 1, wherein
the production equipment related information includes production equipment production capacity information indicating a production capacity of the production equipment,
the production equipment value prediction unit specifies the production capacity of the production equipment from the production equipment production capacity information in response to an evaluation request, from a customer, for evaluating production equipment of the customer, and predicts, as the values, values in reoperation and reproduction for the production equipment on the basis of the production capacity,
the production equipment valuation unit compares the predicted values in the reoperation and the reproduction, and
the production equipment processing destination determination unit selects either the reoperation or the reproduction as processing for the production equipment in accordance with a comparison result by the production equipment valuation unit.

4. The production equipment valuation device according to claim 1,
wherein the production equipment value prediction unit predicts the values including at least a value in recycling for the production equipment.

5. The production equipment valuation device according to claim 1,
wherein the production equipment value prediction unit predicts, as the values, an environmental consideration value including an economic value specified from a price and a cost of the production equipment and an environmental value, which is a value in an environment of the production equipment, in the two or more operations of processing.

6. A production equipment valuation method for evaluating production equipment by using a production equipment valuation device, the method comprising:
storing, in a storage unit, production equipment related information related to the production equipment ;
predicting, by a production equipment value prediction unit, values in two or more operations of processing for the production equipment;
comparing, by a production equipment valuation unit, predicted values in the two or more operations of processing; and
determining, by a production equipment processing destination determination unit, processing in the production equipment from the two or more operations of processing in accordance with a comparison result by the production equipment valuation unit.

7. The production equipment valuation method according to claim 6, comprising: predicting, as the values, at least two from among reoperation, resale, reproduction, and recycling for the production equipment by the production equipment value prediction unit.

8. The production equipment valuation method according to claim 6, wherein the production equipment related information includes production equipment production capacity information indicating a production capacity of the production equipment, the method comprising:
specifying the production capacity of the production equipment from the production equipment production capacity information in response to an evaluation request, from a customer, for evaluating production equipment of the customer, and predicting values in reoperation and reproduction for the production equipment, as the values, on the basis of the production capacity, by the production equipment value prediction unit;
comparing predicted values in the reoperation and the reproduction by the production equipment valuation unit; and
selecting either the reoperation or the reproduction by the production equipment processing destination determination unit as processing for the production equipment in accordance with a comparison result by the production equipment valuation unit.

9. The production equipment valuation method according to claim 6, comprising: predicting the values including at least a value in recycling for the production equipment by the production equipment value prediction unit.

10. The production equipment valuation method according to claim 6, comprising: predicting, as the values, an environmental consideration value including an economic value specified from a price and a cost of the production equipment and an environmental value, which is a value in an environment of the production equipment, in the two or more operations of processing by the production equipment value prediction unit.

11. A production equipment valuation program causing a production equipment valuation device that evaluates production equipment and includes a storage unit that stores production equipment related information related to the production equipment to function as:
a production equipment value prediction unit that predicts values in two or more operations of processing for the production equipment;
a production equipment valuation unit that compares predicted values in the two or more operations of processing; and
a production equipment processing destination determination unit that determines processing in the production equipment from the two or more operations of processing in accordance with a comparison result by the production equipment valuation unit.

12. The production equipment valuation program according to claim 11,
wherein the production equipment value prediction unit predicts, as the values, values in at least two from among reoperation, resale, reproduction, and recycling for the production equipment.

13. The production equipment valuation program according to claim 11, wherein
the production equipment related information includes production equipment production capacity information indicating a production capacity of the production equipment,
the production equipment value prediction unit specifies the production capacity of the production equipment from the production equipment production capacity information in response to an evaluation request, from a customer, for evaluating production equipment of the customer, and predicts, as the values, values in reoperation and reproduction for the production equipment on the basis of the production capacity,
the production equipment valuation unit compares predicted values in the reoperation and the reproduction, and
the production equipment processing destination determination unit selects either the reoperation or the reproduction as processing for the production equipment in accordance with a comparison result by the production equipment valuation unit.

14. The production equipment valuation program according to claim 11,
wherein the production equipment value prediction unit predicts the values including at least a value in recycling for the production equipment.

15. The production equipment valuation program according to claim 11,
wherein the production equipment value prediction unit predicts, as the values, an environmental consideration value including an economic value specified from a price and a cost of the production equipment and an environmental value, which is a value in an environment of the production equipment, in the two or more operations of processing.
